# EUROPÄISCHE PATENTANMELDUNG

(11) **EP 0 999 301 A2**
(43) Veröffentlichungstag der Anmeldung: **10.05.2000**
(21) Anmeldenummer: 99121613.6
(22) Anmeldetag: 29.10.1999
(51) Int. Cl.: D06F 39/08, G05D 7/01

(54) **Durchflussmengenbegrenzer**

(30) Priorität: 03.11.1998 DE 19850588
(71) Anmelder: Bartling, Luise, 31008 Elze (DE); Goldmann, Norbert, 31832 Springe (DE)
(72) Erfinder: Bartling, Werner, 31008 Elze (DE)
(74) Vertreter: Braun, Dieter, Dipl.-Ing.

(57) **Zusammenfassung**

Die Erfindung bezieht sich auf einen Durchflußmengenbegrenzer für eine Flüssigkeit führende Rohrleitung (2), aufweisend ein in der Rohrleitung anzuordnendes ansteuerbares Absperrorgan (1), eine Steuereinheit (7) zu dessen Ansteuerung und einen mit der Steuereinheit verbundenen Sensor zur Registrierung eines Durchflusses von Flüssigkeit durch die Rohrleitung. Der Durchflußmengenbegrenzer zeichnet sich dadurch aus, daß er ferner in Durchflußrichtung hinter dem Absperrorgan einen Druckbegrenzer (4) aufweist und der Sensor hinter dem Druckbegrenzer angeordneter Druckschalter (5) ist, der mit einem Impulse an einen Zeitrelais aussendenden Kontaktgeber versehen ist, wobei der Durchflußmengenbegrenzer so ausgelegt ist, daß die Steuereinheit an das Absperrorgan einen Befehl zum Schließen gibt, wenn der Druckschalter einen Druck unterhalb eines durch den Druckbegrenzer vorgegebenen Normaldrucks über einen vorgegebenen ununterbrochenen Zeitraum registriert. Der Durchflußmengenbegrenzer ist mit einfachen Mitteln realisierbar, gleichzeitig läßt sich ein unbeabsichtigter Durchfluß von Flüssigkeit durch eine Rohrleitung mit hoher Sicherheit begrenzen.

## Beschreibung

Diese Erfindung bezieht sich auf einen Durchflußmengenbegrenzer für eine Flüssigkeit führende Rohrleitung, wobei der Durchflußmengenbegrenzer ein in der Rohrleitung anzuordnendes ansteuerbares Absperrorgan, eine Steuereinheit zu dessen Ansteuerung und einen mit der Steuereinheit verbundenen Sensor zur Registrierung eines Durchflusses von Flüssigkeit durch die Rohrleitung aufweist.

Aus der DE 38 01 963 C1 ist ein Durchflußmengenbegrenzer der genannten Art bekannt. Er weist eine Bypassleitung auf, die parallel zu einem mit einer Drossel versehenen Abschnitt der Rohrleitung angeordnet ist. In der Bypassleitung befindet sich ein Strömungserkennungsorgan, das mit einem Kontaktgeber für die Übertragung von Impulsen zu einem Zeitrelais versehen ist. Das Zeitrelais wirkt über die Steuereinheit auf das Absperrorgan, derart, daß das Absperrorgan geschlossen wird, wenn das Strömungserkennungsorgan ununterbrochen über eine vorgegebene Zeitspanne einen Durchfluß von Flüssigkeit registriert. Mit dem bekannten Durchflußmengenbegrenzer können sehr geringe Durchflußmengen bei verschieden großen Querschnitten der Rohrleitung sowohl im Normalbetrieb als auch im Störungsfall mit gleichbleibend hoher Genauigkeit registriert werden. Die Anordnung einer Bypassleitung parallel zu einer Drossel in der Rohrleitung ist jedoch relativ aufwendig.

Der Erfindung liegt daher die Aufgabe zugrunde, einen mit einfachen Mitteln realisierbaren Durchflußmengenbegrenzer vorzusehen.

Diese Aufgabe wird durch die Merkmale des Anspruchs 1 gelöst.

Der Durchflußmengenbegrenzer weist in Durchflußrichtung hinter dem Absperrorgan einen Druckbegrenzer auf. Der Sensor zur Registrierung eines Durchflusses von Flüssigkeit durch die Rohrleitung ist ein hinter dem Druckbegrenzer angeordneter Druckschalter, der mit einem Impulse an ein Zeitrelais aussendenden Kontaktgeber versehen ist. Der Durchflußmengenbegrenzer ist so ausgelegt, daß die Steuereinheit an das Absperrorgan einen Befehl zum Schließen gibt, wenn der Druckschalter einen Druck unterhalb eines durch den Druckbegrenzer vorgegebenen Normaldrucks der Flüssigkeit in der Rohrleitung über einen vorgegebenen durchgehenden Zeitraum registriert, der vorzugsweise wählbar ist. Dabei ist der Druckbegrenzer vorzugsweise so ausgelegt, daß auch der Normaldruck und der Druckwert, bei dem der Kontaktgeber aktiviert wird, wählbar sind.

Der erfindungsgemäße Durchflußmengenbegrenzer kann sowohl bei verbrauchsabhängigen, also offenen Systemen, als auch bei geschlossenen druckbeaufschlagten Systemen eingesetzt werden. Bei einem offenen System ist der Normaldruck der Druck innerhalb der Rohrleitung, wenn keine Flüssigkeitsentnahme stattfindet. Indem der Durchflußmengenbegrenzer bei einem solchen System den Druckabfall registriert, der dadurch entsteht, daß ein mit Flüssigkeitsentnahme verbundener Durchfluß von Flüssigkeit durch die Rohrleitung stattfindet, ist unter Verwendung einfacher Mittel eine Überwachung einer Rohrleitung eines offenen Systems hinsichtlich eines Flüssigkeitsdurchflusses möglich. Ferner kann der Durchflußmengenbegrenzer bei geschlossenen Systemen verwendet werden, um kleine Leckagen über die daraus resultierenden geringen Druckabfälle zu registrieren und infolge den Durchfluß von Flüssigkeit durch die Rohrleitung zu stoppen. Wenn, wie vorzugsweise vorgesehen, ein Micro-Druckschalter eingesetzt wird, ist gleichzeitig eine hohe Empfindlichkeit des Durchflußmengenbegrenzers gewährleistet.

Im Rahmen der Erfindung kann ferner vorgesehen sein, daß der Durchflußmengenbegrenzer so ausgelegt ist, daß die Steuereinheit auch dann an das Absperrorgan einen Befehl zum Schließen gibt, wenn durch den Druckschalter eine Unterschreitung eines vorgegebenen, vorzugsweise durch entsprechende Einstellung des Druckschalters wählbaren Minimaldrucks registriert wird. Auf diese Weise ist gewährleistet, daß über das Absperrorgan die Rohrleitung sofort geschlossen wird, wenn hinter dem Absperrorgan ein größeres Leck aufgetreten ist oder sogar ein Rohrbruch stattgefunden hat.

Das Absperrorgan ist vorzugsweise ein elektromagnetisch betätigbares Absperrventil, das im stromlosen Zustand geschlossen ist. Auf diese Weise wird auch bei Stromausfall ein Risiko aufgrund eines Störungsfalls vermieden.

Ferner kann vorgesehen sein, daß in Durchflußrichtung dem Druckschalter ein Durchflußmesser folgt. Dieser Durchflußmesser kann zum einen dazu dienen, den Durchfluß von Flüssigkeit durch die Rohrleitung zu protokollieren, andererseits kann der Durchflußmesser ebenfalls mit einem Kontaktgeber versehen sein, der Impulse an ein weiteres Zeitrelais aussendet. Dabei ist der Durchflußmengenbegrenzer so ausgelegt ist, daß die Steuereinheit auch dann an das Absperrorgan einen Befehl zum Schließen gibt, wenn durch den Durchflußmesser ein Flüssigkeitsdurchfluß durchgehend über einen vorgegebenen, vorzugsweise wählbaren Zeitraum registriert wird. Somit kann insbesondere dann, wenn der Druckschalter nicht so ausgelegt ist, daß er auf sehr geringe Druckunterschiede reagiert, ein zusätzliches Sicherheitsmodul geschaffen werden, über das insbesondere dann eine Schließung des Absperrorgans folgt, wenn eine äußerst geringe Flüssigkeitsmenge über einen längeren Zeitraum durch die Rohrleitung fließt.

Ferner kann bei Einsatz des genannten Durchflußmessers der Durchflußmengenbegrenzer auch so ausgelegt sein, daß die Steuereinheit an das Absperrorgan einen Befehl zum Schließen gibt, wenn der Durchflußmesser eine Durchflußmenge registriert, die oberhalb einer vorgegebenen Maximaldurchflußmenge liegt. Somit kann auf einfache Weise eine gewünschte maximale Durchflußmenge einer Anlage kontrolliert werden.

Das bzw. die Zeitrelais können beispielsweise als Teil der Steuereinheit vorgesehen sein. Die von dem jeweiligen Zeitrelais registrierte Zeitspanne wird immer dann auf Null zurückgesetzt, wenn der Flüssigkeitsdurchfluß beispielsweise durch Schließen einer Entnahmestelle gestoppt wird, bevor die vorgegebene Zeitdauer registriert ist. Für den Fall, daß das Absperrorgan aufgrund eines Befehls der Steuereinheit geschlossen worden ist, kann das Absperrorgan durch Betätigung eines beispielsweise an der Steuereinheit vorgesehenen Schalters wieder geöffnet werden.

Der Durchflußmengenbegrenzer kann insbesondere bei einem Wasserversorgungssystem eines Hauses eingesetzt werden, wodurch beispielsweise tropfende Wasserhähne und defekte Waschmaschinen oder Geschirrspülautomaten erkannt werden können bzw. ein durch sie entstehender Schaden begrenzt werden kann. Geschlossene Systeme, bei denen der Durchflußmengenbegrenzer insbesondere verwendet werden kann, sind z. B. Heizungsanlagen, Kühlsysteme, Hydrauliksysteme, automatische Löschsysteme, insbesondere Sprinkleranlagen, und dergleichen.

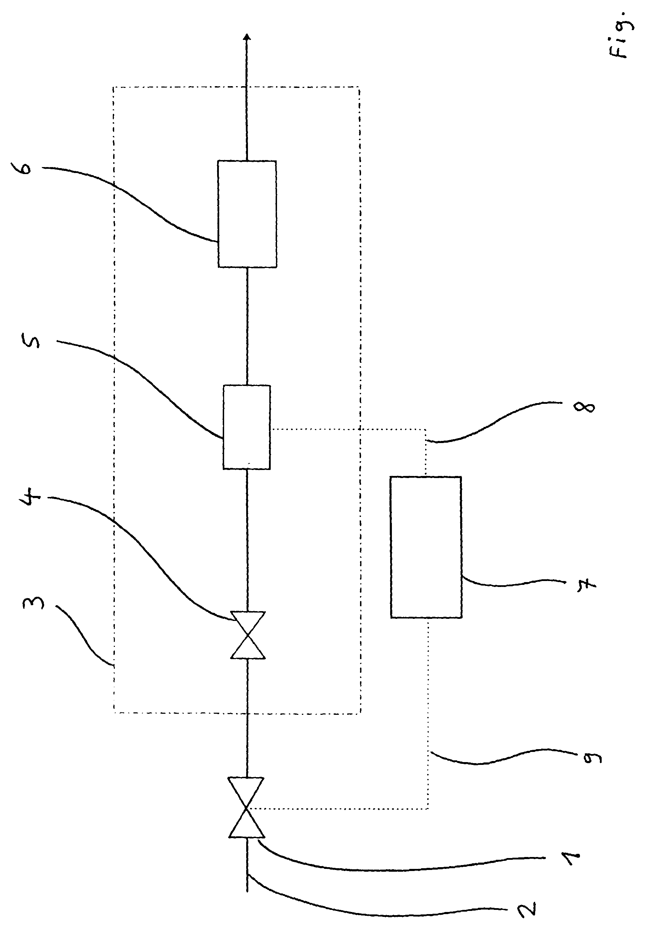

Im folgenden wird die Erfindung anhand eines Ausführungsbeispiels näher erläutert, wobei auf die Figur Bezug genommen wird.

Die einzige Figur zeigt schematisch einen erfindungsgemäßen Durchflußmengenbegrenzer.

Der Durchflußmengenbegrenzer weist ein Magnetventil 1 auf, das in stromlosem Zustand durch Federkraft geschlossen gehalten wird. Das Magnetventil 1 befindet sich in einer Hauptrohrleitung 2 eines Wasserversorgungssystems. Zu einer baulichen Einheit 3 zusammengefaßt folgen dem Magnetventil 1 in Durchflußrichtung ein Druckbegrenzer 4 und ein Micro-Druckschalter 5 mit zwei Drucksensoren. Der Druckschalter 5 besitzt zwei einstellbare Schaltpunkte, die jeweils einem der beiden Sensoren zugeordnet sind. Dem Druckschalter 5 folgt ein Durchflußmesser 6, von diesem führt die Rohrleitung 2 weiter zu den Verbrauchern, die nicht dargestellt sind.

Eine an das Stromnetz angeschlossene Steuereinheit 7 ist über eine Steuerleitung 8 mit dem Micro-Druckschalter 5 und über eine Steuerleitung 9 mit dem Magnetventil 1 verbunden.

Der Durchflußmengenbegrenzer arbeitet nach dem folgenden Prinzip. Im Normalfall ist das Magnetventil 1 geöffnet. Durch den Druckbegrenzer 4 wird gewährleistet, daß am Ausgang der Einheit 3 ein vorgegebener, wählbarer Wasserdruck in der Rohrleitung 2 herrscht, der im folgenden als Anlagendruck bezeichnet wird. Wenn über einen Verbraucher der Rohrleitung 2 Wasser entnommen wird, sinkt der an dem Micro-Druckschalter 5 anliegende Wasserdruck auf einen Wert unterhalb des gewählten Anlagendrucks. Wenn der Wert des anliegenden Wasserdrucks dem ersten Schaltpunkt entspricht oder unterhalb von diesem liegt, beginnt der Druckschalter 5, über einen Kontaktgeber Impulse zu einem innerhalb der Steuereinheit 7 angeordneten Zeitrelais auszusenden. Dies geschieht solange, bis an dem Micro-Druckschalter 5 wieder der Anlagendruck anliegt, was der Fall ist, wenn der Rohrleitung 2 kein Wasser mehr entnommen wird. Wenn die über das Zeitrelais gemessene Zeitspanne dabei einen vorgegebenen Zeitwert erreicht, der z. B. 30 Minuten betragen kann, gibt die Steuereinheit 7 an das Magnetventil 1 einen Befehl zum Schließen. Das Magnetventil 1 bleibt dann so lange geschlossen, bis es durch manuelle Betätigung eines Schalters der Steuereinheit 7 wieder geöffnet wird.

Der zweite einstellbare Schaltpunkt des Micro-Druckschalters 5 ist durch einen vorgegebenen, minimalen Wasserdruck in der Rohrleitung 2 bestimmt. Wenn dieser Minimaldruck unterschritten wird, sendet der Micro-Druckschalter 5 ein Informationssignal an die Steuereinheit 7 aus, die wiederum einen Schließbefehl an das Magnetventil 1 gibt. Auf diese Weise wird bei einem Rohrbruch oder bei einem größeren Leck der Rohrleitung 2 eine Sofortschließung des Magnetventils 1 unter Abgabe einer Störmeldung bewirkt.

Der Durchflußmesser 6 dient zum einen dazu, den Durchfluß von Wasser durch die Rohrleitung 2 zu protokollieren. Desweiteren findet auch über den Durchflußmesser 6 eine Zeitmessung während eines ununterbrochenen Durchlaufs von Wasser statt. Hierzu gibt auch der Durchflußmesser 6 über einen Kontaktgeber Impulse an ein weiteres innerhalb der Steuereinheit 7 angeordnetes Zeitrelais. Wenn diese Zeitspanne einen vorgegebenen wählbaren Wert überschreitet, gibt die Steuereinheit 7 wiederum einen Schließbefehl an das Magnetventil 1. Auf diese Weise ist eine weitere Sicherung gegen einen unbeabsichtigten Flüssigkeitsfluß durch die Rohrleitung 2 gegeben, insbesondere für den Fall, daß eine äußerst geringe Wassermenge durch die Rohrleitung 2 fließt.

Ferner weist der Durchflußmesser 6 einen einstellbaren Schaltkontakt auf, der dann aktiviert wird, wenn die Durchflußmenge eine vorgegebene Maximaldurchflußmenge überschreitet. Durch den aktivierten Schaltkontakt wird ein Signal an die Steuereinheit 7 gegeben, die wiederum sofort einen Schließbefehl an das Absperrorgan 1 aussendet.

Es kann ferner ein Feuchtefühler auf dem Boden der entsprechenden Räumlichkeit vorgesehen und an die Steuereinheit 7 angeschlossen sein. In diesem Fall wird zusätzlich über den Feuchtefühler auf dem Fußboden stehendes Wasser registriert, worauf die Steuereinheit 7 wiederum einen Schließbefehl an das Magnetventil 1 abgibt.

Die von den Zeitrelais jeweils registrierte Zeit wird dann auf Null zurückgesetzt, wenn die Entnahme von Wasser beendet wird, bevor die jeweils vorgegebene Zeitdauer erreicht ist.

In die Steuereinheit 7 kann ferner auch eine programmierbare Wochenzeitschaltuhr eingebaut sein.

Generell können auch mehr als zwei Schaltpunkte des Druckschalters vorgesehen sein. Beispielsweise können für verschiedene Werte einer Unterschreitung des Normaldruckes verschiedene jeweils zugehörige Zeitintervalle vorgesehen sein, nach deren Ablauf eine Schließung des Absperrorgans erfolgt. So kann beispielsweise für einen relativ großen Druckabfall eine kürzere Zeitdauer vorgesehen sein, als für einen nur geringfügigen Druckabfall. In diesem Fall muß der Druckschalter mit einer entsprechenden Anzahl Zeitrelais verbunden sein.

Mit dem erfindungsgemäßen Durchflußmengenbegrenzer läßt sich auf einfache und sichere Weise ein unbeabsichtigter Wasserfluß durch eine Rohrleitung sowohl in einem Störungsfall, wie z. B. einem Rohrbruch oder einer Undichtigkeit der Rohrleitung, als auch in dem Fall, daß eine Wasserentnahmestelle versehentlich nicht geschlossen wurde, auf ein vorgegebenes Maß beschränken.

## Patentansprüche

1. Durchflußmengenbegrenzer für eine Flüssigkeit führende Rohrleitung (2), aufweisend ein in der Rohrleitung (2) anzuordnendes ansteuerbares Absperrorgan (1), eine Steuereinheit (7) zu dessen Ansteuerung und einen mit der Steuereinheit (7) verbundenen Sensor zur Registrierung eines Durchflusses von Flüssigkeit durch die Rohrleitung (2), dadurch gekennzeichnet, daß der Durchflußmengenbegrenzer ferner in Durchflußrichtung hinter dem Absperrorgan (1) einen Druckbegrenzer (4) aufweist und der Sensor ein hinter dem Druckbegrenzer (4) angeordneter Druckschalter (5) ist, der mit einem Impulse an ein Zeitrelais aussendenden Kontaktgeber versehen ist, wobei der Durchflußmengenbegrenzer so ausgelegt ist, daß die Steuereinheit (7) an das Absperrorgan (1) einen Befehl zum Schließen gibt, wenn der Druckschalter (5) einen Druck unterhalb eines durch den Druckbegrenzer (4) vorgegebenen Normaldrucks über einen vorgegebenen ununterbrochenen Zeitraum registriert.

2. Durchflußmengenbegrenzer nach Anspruch 1, dadurch gekennzeichnet, daß er so ausgelegt ist, daß die Steuereinheit (7) auch dann an das Absperrorgan (1) einen Befehl zum Schließen gibt, wenn durch den Druckschalter (5) eine Unterschreitung eines vorgegebenen Minimaldrucks registriert wird.

3. Durchflußmengenbegrenzer nach Anspruch 1 oder 2, dadurch gekennzeichnet, daß das Absperrorgan ein Magnetventil (1) ist, das in stromlosem Zustand geschlossen ist.

4. Durchflußmengenbegrenzer nach einem der vorhergehenden Ansprüche, dadurch gekennzeichnet, daß in Durchflußrichtung dem Druckschalter (5) ein Durchflußmesser (6) folgt.

5. Durchflußmengenbegrenzer nach Anspruch 4, dadurch gekennzeichnet, daß der Durchflußmesser (6) mit einem Kontaktgeber versehen ist, der Impulse an ein weiteres Zeitrelais aussendet, und der Durchflußmengenbegrenzer so ausgelegt ist, daß die Steuereinheit (7) an das Absperrorgan (1) einen Befehl zum Schließen gibt, wenn durch den Durchflußmesser (6) ein Flüssigkeitsdurchfluß ununterbrochen über einen vorgegebenen Zeitraum registriert wird.

6. Durchflußmengenbegrenzer nach Anspruch 4 oder 5, dadurch gekennzeichnet, daß der Durchflußmengenbegrenzer so ausgelegt ist, daß die Steuereinheit (7) an das Absperrorgan (1) einen Befehl zum Schließen gibt, wenn der Durchflußmesser (6) eine Durchflußmenge registriert, die oberhalb einer vorgegebenen Maximaldurchflußmenge liegt.
